# EUROPEAN PATENT APPLICATION

(11) **EP 2 117 097 A1**
(43) Date of publication of application: **11.11.2009**
(21) Application number: 08253020.5
(22) Date of filing: 12.09.2008
(51) Int. Cl.: H02J 7/00

(54) **Battery charging and isolation system for gas engine**

(30) Priority: 06.05.2008 US 115749
(71) Applicant: Techtronic Industries Company Limited, Tsuen Wan, New Territories (HK)
(72) Inventor: Boyles, Samuel, Easley, SC 29642 (US); Cook, Trent A., Anderson, SC 29621 (US)
(74) Representative: Martin, David John

(57) **Abstract**

A control system is adapted to control an internal combustion engine, which has a battery for electric start operation and a mechanical starter for manual start operation. The control system includes a transformer configured to generate a high voltage output for providing a spark, and a power regulation circuit having an input adapted to receive the high voltage output and generate a low voltage supply. A battery charging circuit includes a switching element adapted to receive the low voltage supply and operatively couple the low voltage supply to the battery to charge the battery. The battery charging circuit includes a disconnecting circuitry diode operatively coupled to the switching element so that if a voltage level of the battery falls below a predetermined value, the disconnecting circuitry diode turns off the transistor to electrically disconnect the battery from the low voltage supply and disable the electric start operation. The mechanical starter is configured to start the engine if the battery is insufficiently charged to drive the electric motor to start the engine.

## Description

### BACKGROUND

This disclosure relates to a battery charging and isolation system. In particular, this disclosure relates to a battery charging and isolation circuit for a small internal-combustion engine configured to power lawn and gardening equipment, which has a starter motor, a battery, and control circuitry.

Some internal-combustion engines, such as small two-cycle engines used to power lawn and gardening equipment may be started by either electrically using a starter motor and a battery, or by using a mechanical device, such as a recoil mechanism. Some engines may include both starting systems. More sophisticated engines have a fuel-injection system, which is typically controlled by control circuitry. Rotation of the engine turns a magneto assembly, which supplies a high-voltage signal to the spark plugs. The high-voltage signal is typically stepped-down and filtered to provide a conditioned supply voltage to the circuitry.

However, if the control circuitry fails or the conditioned supply voltage is interrupted or otherwise degraded, the engine will not run, typically due to failure of the fuel injection system. The battery that supplies power to the starter motor has a finite life and eventually must be replaced. Such batteries tend to fail on occasion due to the harsh environment in which the devices are used. If the battery does fail, in known systems, such a failure typically interrupts, short-circuits, or otherwise degrades the conditioned supply voltage, thus causing engine failure, even though the other components of the system may be functioning properly. A need exists for effectively removing or isolating a drained or short-circuited battery from the other electrical components of the engine system so that the engine can still be started mechanically.

### SUMMARY

According to a first aspect the invention provides a control system for an internal combustion engine having a battery for electric start operation and a mechanical starter for manual start operation, the control system comprising a transformer configured to generate a high voltage output for providing a spark, a power regulation circuit having an input adapted to receive the high voltage output and generate a low voltage supply, and a battery charging circuit having a switching element adapted to receive the low voltage supply and operatively couple the low voltage supply to the battery to charge the battery, the battery charging circuit including disconnecting circuitry operatively coupled to the switching element, wherein if a voltage level of the battery falls below a predetermined threshold value, the disconnecting circuitry turns off the transistor to electrically disconnect the battery from the low voltage supply and disable the battery charging operation, wherein the mechanical starter is configured to start the engine if the battery is insufficiently charged to drive the electric motor to start the engine.

The battery charging unit may include a blocking diode operatively coupled between an output terminal of the switching element and the battery to prevent reverse current flow from the battery to the switching element.

A starter motor may be in communication with the battery, wherein a short-circuit between the starter motor and ground causes a voltage level of the battery to fall below the predetermined threshold value of the disconnecting circuitry, and turns off the switching element to operatively disconnect the battery and the starter motor from the low voltage supply.

The disconnecting circuitry may be a Zener diode. The battery charging circuit may include a biasing resistor having a first end coupled to the low voltage supply, and a second end coupled to a control terminal of the switching element and to a cathode of the Zener diode, the biasing resistor providing a voltage sufficient to maintain the Zener diode in a breakdown mode. The threshold of the Zener diode is preferably between about 1 volt and about 5 volts less than a maximum battery voltage. For typical applications it may for example be between about 9 volts and about 12 volts, or about 12 volts.

In a further aspect the invention resides in a control system for an internal combustion engine having an electric starter motor powered by a battery, and having a mechanical starter for manual start operation, the control system comprising an ignition circuit configured to generate a high-voltage output for providing a spark, a power conditioning circuit configured to convert the high-voltage output to a low voltage supply, a voltage regulation circuit having an input adapted to receive the low voltage supply and provide a regulated component supply voltage, an electronic control unit adapted to receive the regulated component supply voltage and control functioning of the engine, a battery charging circuit having an electronic switching element adapted to receive the low voltage supply and operatively couple the battery to the low voltage supply to charge the battery, the battery charging circuit including disconnecting circuitry operatively coupled to a base of an electronic switching element, wherein if a voltage level of the battery falls below a predetermined value, the disconnecting circuitry turns off the electronic switching element to electrically disconnect the battery from the low voltage supply and disable battery charging operation, and wherein the mechanical starter is configured to start the engine if the battery is insufficiently charged to drive the electric motor to start the engine.

In a further aspect the invention resides in a battery isolation circuit for use with a power conditioning circuit for an internal combustion engine, the engine having an electric starter motor powered by a battery and a mechanical starter for manual start operation, the battery isolation circuit comprising a transistor adapted to receive a low voltage supply from the power conditioning circuit and operatively couple the low voltage supply to the battery to charge the battery when the transistor is turned on, disconnecting circuitry operatively coupled to a base of the transistor and to the low voltage supply, wherein if a voltage level of the battery falls below a predetermined threshold value of the disconnecting circuitry, the disconnecting circuitry turns off the transistor to electrically disconnect the battery from the low voltage supply, and wherein the mechanical starter is configured to start the engine if the battery is insufficiently charged.

### BRIEF DESCRIPTION OF THE DRAWINGS

Embodiments of the invention are described, by way of example only, with reference to the following drawings in which:

Figure 1 is a block diagram of an engine system;

Figure 2 is a schematic diagram of a battery charge/isolation circuit according to a specific embodiment;

Figure 3 is a schematic diagram of an electric starting circuit according to a specific embodiment;

Figure 4 is a schematic diagram of an ignition circuit according to a specific embodiment;

Figure 5 is a schematic diagram of a power generation circuit and a voltage regulation circuit according to a specific embodiment; and

Figure 6 is a schematic diagram of an electronic control unit and fuel injection circuit according to a specific embodiment.

### DETAILED DESCRIPTION OF EMBODIMENTS

The invention is described with reference to the drawings in which like elements are referred to by like numerals. The relationship and function of the various elements of this invention are better understood by the following description. Each aspect so defined may be combined with any other aspect or aspects unless clearly indicated to the contrary.

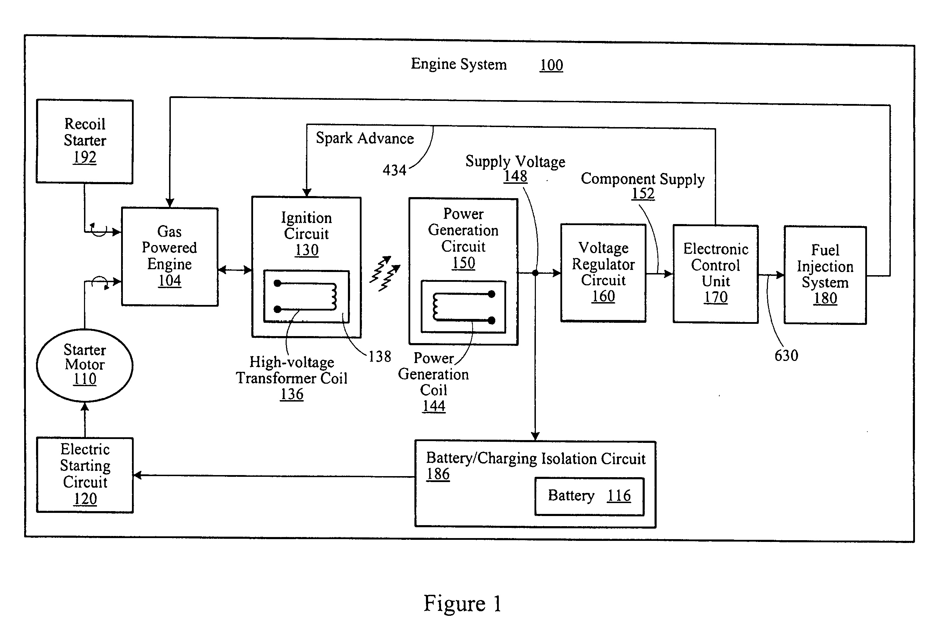

Figure 1 is a block diagram of an internal-combustion engine system 100, including various electronic circuits and components. An internal-combustion engine 104, may be for example, a two-cycle gasoline engine. The engine 104 may be used in lawn and gardening equipment and outdoor tools, such as line or string trimmers, hedge trimmers, leaf blowers, chain saws, and other small outdoor-type tools. Any suitable internal-combustion engine may be used.

The engine system 100 includes a starter motor 110 to start the engine 104, a starter motor battery 116 to power the starter motor 110, and an electric starting circuit 120 to control the starter motor. An ignition circuit 130 provides a high-voltage output via a high-voltage transformer coil 136 of a high voltage transformer 138 to supply a spark to the spark plugs. The high-voltage transformer coil 136 is inductively coupled to a power generation coil 144 of a power generation circuit 150, which may step-down and rectify the high voltage output to generate a reduced rectified supply voltage 148 at about an 18 volt level in one specific embodiment. The 18 volt supply voltage or supply voltage 148 may have spike or pulse-like waveform because it is derived from transformer coils having currents induced by rotating magnet components.

In the illustrated embodiment, a voltage regulator circuit 160 receives the supply voltage 148, and further conditions and filters the signal to provide a 12 volt component supply voltage or component voltage 152, which powers the various electrical components of the engine system 100. For example, the voltage regulator circuit 160 supplies the component voltage 152 to an electronic control unit 170, which in turn, controls a fuel injection system 180. The supply voltage 148 is also supplied to a battery/charging isolation circuit 186, which trickle-charges the starter motor battery 116. Of course, the power generation circuit 150 may be configured to provide any suitable voltage level so long as this level is equal to or greater than the voltage rating of the starter motor battery 116 so that trickle-charging may be performed.

The internal-combustion engine 104 of the illustrated embodiment is a conventional gasoline engine having a dual-mode starting mechanism. In that regard, the engine 104 has a conventional recoil starter 192, which is configured to rotate the engine flywheel when pulled or cranked by the user so as to start the engine 104. In addition to the recoil starter 192, the engine 104 includes the electric starter motor 110 to start the engine. Thus, the user may start the engine 104 either manually using the recoil starter 192 or electrically using the starter motor 110.

Because the above-described circuits are coupled to an internal-combustion engine 104, which may be adapted for outdoor use or use in challenging environments, such components may be subjected to harsh conditions. Such harsh conditions may include extremes of temperature, precipitation and moisture, shock and vibration, and other conditions that may damage the components or circuitry. Such harsh conditions may also damage the starter motor battery 116 or may cause a short circuit or open circuit somewhere in the engine system 100.

Although sufficiently harsh conditions may damage one or more critical components so that the engine 104 will fail to operate, neither the starter motor battery 116 nor the starter motor 110 is such a critical component. That is, failure of the starter motor battery 116 or the starter motor 110 should not disable the engine 104 because the second system, namely the manual recoil starter 192, may be used to start the engine. Furthermore, once the engine 104 has been started, the power generation circuit 150 generates the electricity necessary to power the electrical components. In addition to possible battery damage caused by misuse or harsh conditions, in some circumstances, the battery 116 may become drained or otherwise fail, as such batteries have a finite useful lifetime. For example, the battery 116 may no longer accept or retain a charge when it reaches the end of its useful life.

In contrast, the electronic control unit 170 and fuel injection system 180 are critical components, and the engine 104 will not run if these components are disabled or otherwise damaged. For example, the electronic control unit 170 or the fuel injection system 180 may become disabled if they do not receive the appropriate voltage levels from the voltage regulation circuit 160, which is dependent on the supply voltage 148 generated by the power generation circuit 150.

Because the starter motor battery 116 is trickle-charged by the supply voltage 148, and the electronic control unit 170 indirectly receives power based on the supply voltage 148 (via the voltage regulation circuit 160), a short-circuit or battery failure may cause failure or interruption of the 18 volt supply voltage 148, thus disabling the engine 104. Accordingly, the battery charge/isolation circuit 186 is configured to isolate the starter motor battery 116 from both the power generation circuit 150 and the voltage regulation circuit 160, and/or other components of the system should the battery become drained or short-circuited, or otherwise interfere with the supply voltage 148.

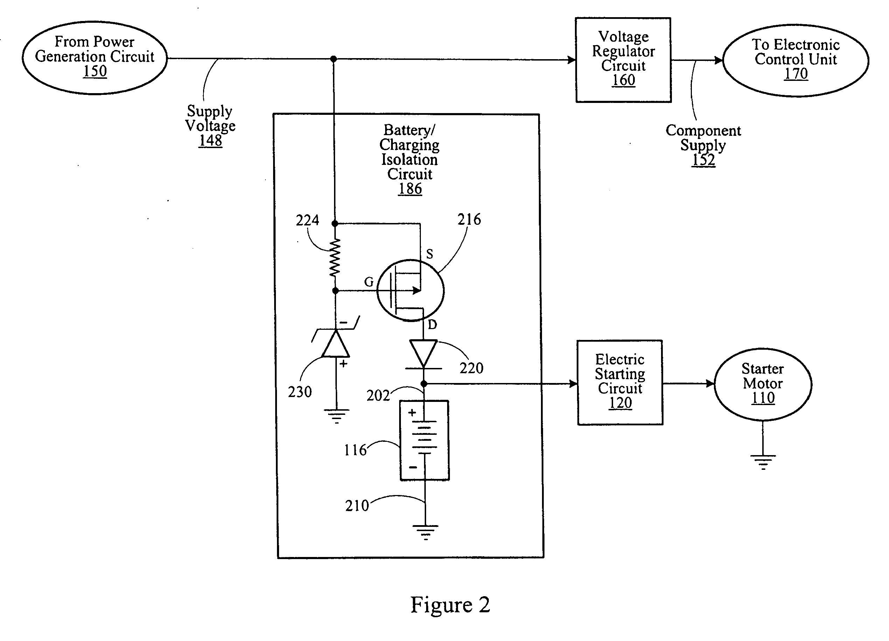

Figure 2 is a schematic diagram of the battery charging and isolation circuit 186. The battery charging and isolation circuit 186 is configured to receive the supply voltage 148 from the power generation circuit 150, and is adapted to prevent any interruption, decrease, and/or degradation of the supply voltage 148. This assures that the electronic control unit 170 receives the proper 12 volt regulated supply voltage 152 from the voltage regulation circuit 160. This is important because if the electronic control unit does not function properly due to an improper supply voltage level, the engine will fail to run.

A positive terminal 202 of the starter motor battery 116, such as a 12 volt rechargeable battery, is coupled to the starter motor 110 through the electric starting circuit 120 to provide power to the starter motor, while a negative terminal 210 of the battery is connected to ground. Any suitable battery and/or voltage range may be used, depending on the operating characteristics of the starter motor and the voltage rating of the components of the various circuits.

In the illustrated embodiment, the supply voltage 148 is coupled to a source terminal of a MOS transistor 216. The MOS transistor 216 may be a P-channel enhancement mode vertical DMOS FET, such as part no. ZVP3306A, available from Zetex Semiconductors. Any suitable switching element or transistor may be used. The positive terminal of the battery 202 is operatively coupled to the drain terminal of the MOS transistor 216 through a blocking diode 220. The blocking diode 220 may prevent current flow from the battery to the MOS transistor 216. A bias resistor 224, such as a 470 ohm resistor, couples the source and gate terminals of the MOS transistor 216. The gate terminal of the transistor 216 is further coupled to ground through a Zener diode 230. The battery 116 may be trickle-charged by the supply voltage 148 through the MOS transistor 216.

If the battery voltage falls below the Zener breakdown threshold (about 12 volts in the illustrated embodiment), or if the battery 116 or the starter motor 110 becomes short-circuited to ground, the voltage level at the cathode of the Zener diode 230 will fall below the Zener threshold level. This occurs because the source terminal of the MOS transistor 216 will tend to be pulled down toward the battery potential through the conducting MOS transistor 216. In one embodiment, the threshold value of the Zener diode 230 is about 12 volts. In another embodiment, the threshold value of the Zener diode 230 is between about 9 volts and about 12 volts. Any suitable Zener threshold value may be used, which may be based on the voltage rating of the battery 116. For example, the Zener diode 230 may be selected to have a threshold value somewhat less than the voltage rating of the battery, for example between about 1 volt and about 5 volts lower than the maximum battery voltage.

The voltage at the gate of the MOS transistor 216 is fixed by the Zener diode 230 at its breakdown voltage. If the supply voltage 148 at the source of the MOS transistor 216 should drop enough to cause the Vgs of the device to be insufficient to keep it turned on, the MOS transistor 216 will turn off. In so doing, the battery 116 is disconnected from the supply voltage 148, thus protecting the voltage regulator circuit 160, the electronic control unit 170, and the fuel injection system 180.

Once the MOS transistor 216 turns off, the supply voltage 148 may then rise to full voltage. However, this may turn the MOS transistor 216 on again. Thus, the MOS transistor 216 may cycle on and off. The duty cycle of such a waveform may be about 20 milliseconds depending on the RC time constants inherent in the circuit and the battery charging characteristics of the battery 116. The cycling of the MOS transistor 216 during battery charging may induce ripple or spikes in the supply voltage 148, but such ripple does not adversely affect the voltage regulator circuit 160, which continues to provide a component voltage 152 to the electronic control unit 170.

During the "on" cycle of the MOS transistor 216, the battery 116 may be trickle-charged. Of course, if the battery 116 experiences a hard failure, or if the starter motor 110 is short-circuited to ground, the MOS transistor 216 will remain off to prevent interference with the supply voltage 148. Accordingly, the various components of the engine system 100 can function properly, including the electronic control unit 170 and the fuel injection system 180, even though the battery 116 or electric start capability is not operational. In this event, the user may start the engine manually using the recoil system 192.

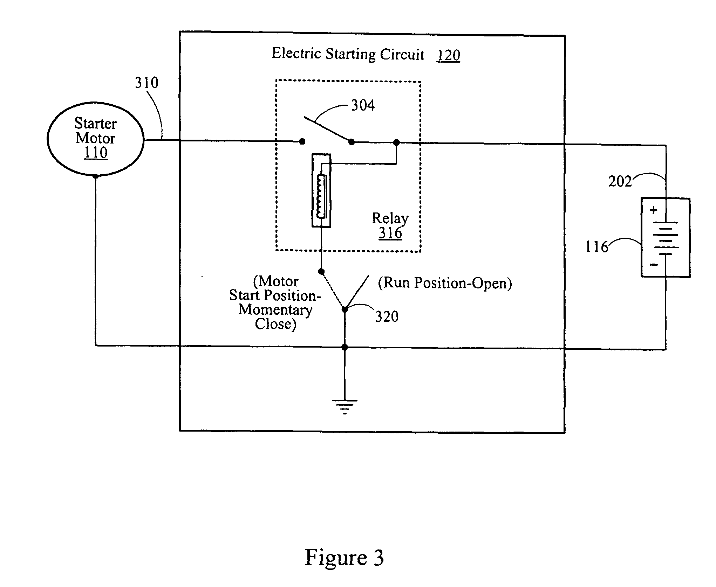

Figure 3 is a schematic diagram of the electric starting circuit 120. The positive terminal 202 of the battery 116 is coupled to a first terminal 310 of the starter motor 110 through a normally-open relay switch 304, which, in the illustrated embodiment, is part of an electromechanical relay 316. A starter switch 320, which may be a momentary contact switch, is shown as normally-open in the "run" position and indicated as "Run Position - Open." To electrically start the engine 104, the user depresses the starter switch 320 to the start position. This applies power to the relay 316, which in turn, closes the normally-open relay switch 314, illustrated using dashed lines and indicated as the "Motor Start Position - Momentary Close". When the relay switch 304 closes, power is provided to the starter motor 110. Once the engine 104 starts, the user may release the starter switch 320, which then returns to the normally-open or run position.

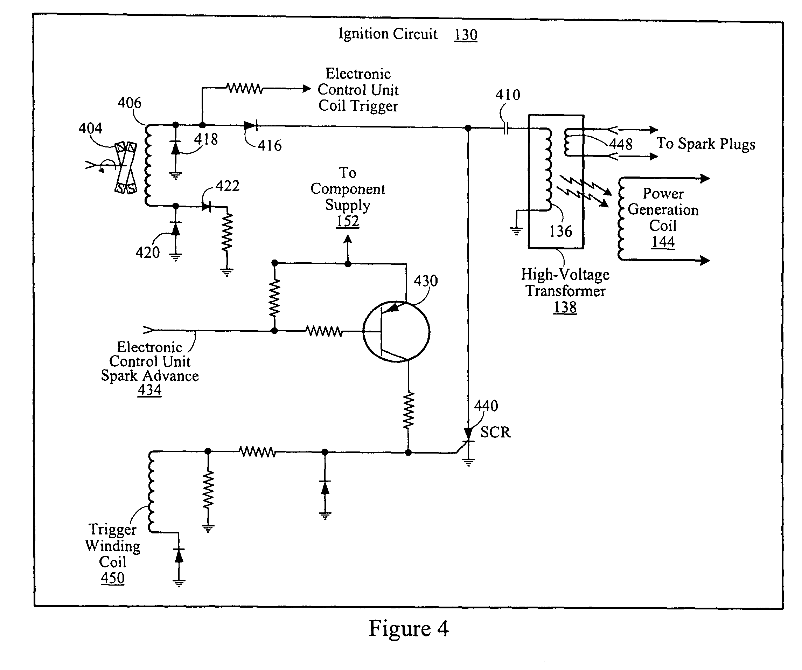

Figure 4 is a schematic diagram of the ignition circuit 130. As the engine 104 rotates, it turns a magnet assembly 404. The magnet assembly 404 rotates in proximity with (or within) a current charging armature coil 406. The magnet assembly 404 and current charging armature coil 406 function as a magneto to provide the spark to the spark plugs and electrical power to the system. The armature coil 406 is coupled to the high voltage transformer coil 136 through a spark ignition capacitor 410. High-voltage diodes 416, 418, 420, and 422 rectify the output of the armature coil 406 and provide a rectified output of about 2,000 volts to about 3,000 volts.

A transistor 430 is controlled via its base terminal by the electronic control unit 170 (ECU 170) (see Figure 1) through an ECU spark advance signal 434. When the ECU spark advance signal 434 triggers the transistor 430, an ignition switch or SCR 440 conducts causing the spark ignition capacitor 410 to discharge, which in turn, creates the spark for the spark plugs through secondary windings 448 of the high voltage transformer 138. The ECU 170 works in conjunction with a trigger winding coil 450 to provide proper timing for the ignition spark ignition capacitor 410. The ignition circuit 130 may be a commercially available ignition circuit, such as a CDI (capacitive discharge ignition) circuit available from PCRC of Missouri.

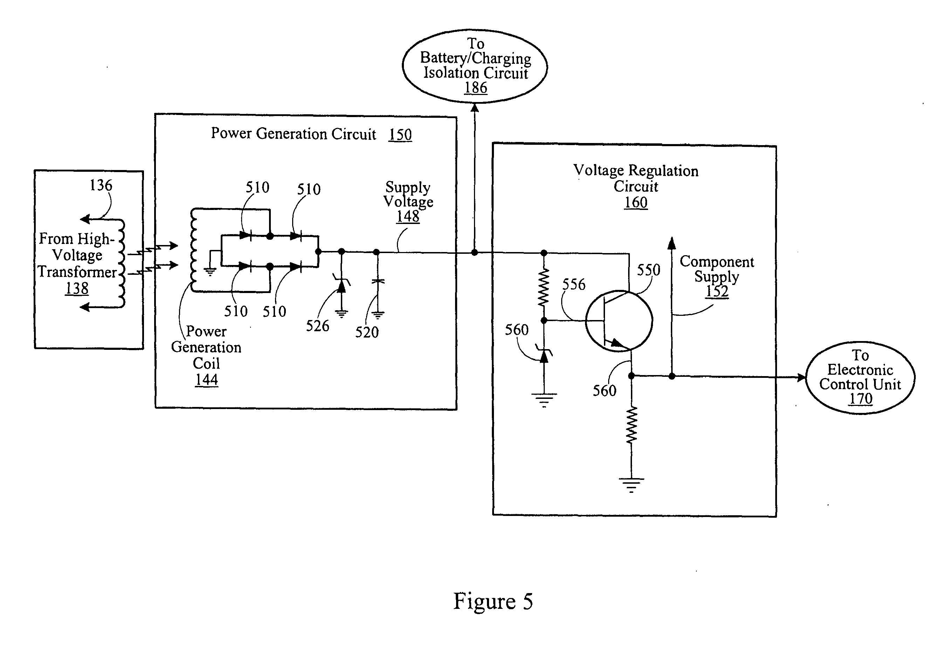

Figure 5 is a schematic diagram of the power generation circuit 150 and the voltage regulation circuit 160. The power generation coil 144 is coupled to a plurality of diodes 510 to provide a full-wave rectified signal. The power generation coil 144, in the illustrated embodiment, is inductively coupled to the high voltage transformer coil 136 of the ignition circuit 130. Thus, there may be no direct wiring or physical connection between the power generation circuit 150 and the ignition circuit 130. The power generation coil 144 may step down the high-voltage output of the transformer coil 136 by a factor of about 100 to about 200 based on the winding turn ratio between the two coils 136 and 144. The stepped-down and rectified signal is at a voltage level to provide the supply voltage 148. The supply voltage 148 is also supplied to the battery charging/isolation circuit 186 and the voltage regulation circuit 160. A storage capacitor 520 smooths the output ripple, while Zener diode 526 regulates the voltage to the desired supply voltage 148 level.

The voltage regulation circuit 160 receives the supply voltage 148 from the power generation circuit 150 and provides regulated electrical power for the various electronic components and circuits that control the engine 104. For example, the voltage regulation circuit 160 provides the component voltage 152 at about a 12 volt level to the electronic control unit 170, which controls many of the electrical functions of the engine 104, including the fuel injection system 180. In the illustrated embodiment, the voltage regulation circuit 160 includes a bipolar transistor 550 having a base terminal 556 coupled to a Zener diode 560. The Zener diode 560 in one embodiment has a breakdown threshold voltage of about 13 volts so that the output of the transistor 550 at an emitter terminal 560 is about 12 volts, which is the component voltage 152 of the above illustrated embodiment. Depending upon system configuration and the various component voltage requirements, any suitable voltage level of the component voltage 152 may be used.

The power generation circuit 150 and voltage regulation circuit 160 need not be in separate circuits and may be combined. Such a combined power generation or power conditioning circuit may provide the appropriate voltage levels to the circuitry of the engine system 100.

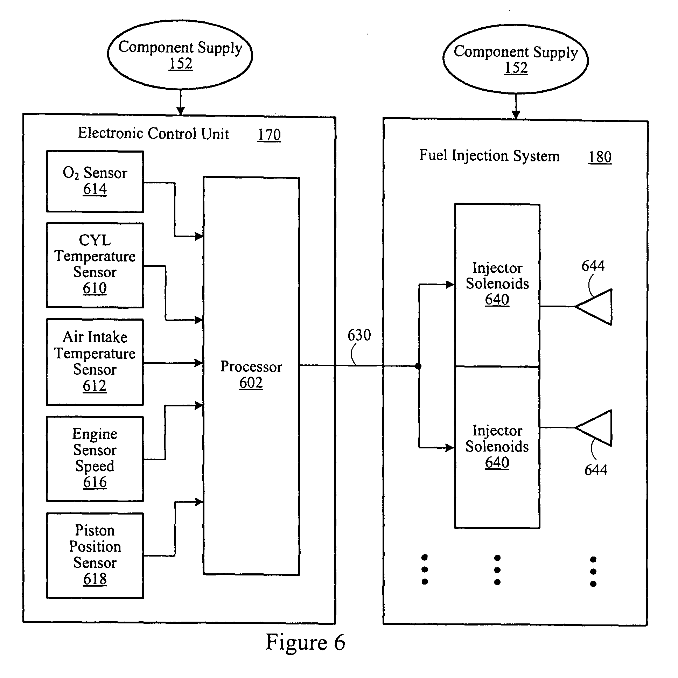

Figure 6 is a block diagram of the electronic control unit 170 and the fuel injection system 180. The electronic control unit 170 of the illustrated embodiment includes a processor 602 and a plurality of sensors to provide data regarding the condition of the engine and environmental parameters. Such sensors, for example, may include a cylinder temperature sensor 610, an air intake temperature sensor 612, an oxygen sensor 614, an engine speed sensor 616, a piston position sensor 618, and other sensors. The processor 602 evaluates the data and determines the timing of the spark advance signal 434 (see Figures 1 and 4). The processor provides injection signals 630 that control when fuel is injected into the engine cylinders. The electronic control unit 170 further controls the fuel injection system 180 via the injection signals 630. The injection signals 630 electrically activate a plurality of corresponding injector solenoids 640, which provide the mechanical force to inject fuel into the cylinders through cylinder nozzles 644.

While the invention has been illustrated and described in detail in the drawings and foregoing description, the same is to be considered as illustrative and not restrictive in character, it being understood that only exemplary embodiments have been shown and described and do not limit the scope of the invention in any manner. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, and, therefore, only such limitations should be imposed as are indicated by the appended claims.

## Claims

1. A control system for an internal combustion engine having a battery for electric start operation and a mechanical starter for manual start operation, the control system comprising:
a transformer configured to generate a high voltage output for providing a spark;
a power regulation circuit having an input adapted to receive the high voltage output and generate a low voltage supply; and
a battery charging circuit having a switching element adapted to receive the low voltage supply and operatively couple the low voltage supply to the battery to charge the battery, the battery charging circuit including disconnecting circuitry operatively coupled to the switching element, wherein if a voltage level of the battery falls below a predetermined threshold value, the disconnecting circuitry turns off the switching element to electrically disconnect the battery from the low voltage supply and disable the battery charging operation;
wherein the mechanical starter is configured to start the engine if the battery is insufficiently charged to drive the electric motor to start the engine.

2. The control system of claim 1, wherein the battery charging circuit includes a blocking diode operatively coupled between an output terminal of the switching element and the battery to prevent reverse current flow from the battery to the switching element.

3. The control system of claim 1 or 2, further comprising a starter motor in communication with the battery.

4. The control system of claim 3, wherein a short-circuit between the starter motor and ground causes a voltage level of the battery to fall below the predetermined threshold value of the disconnecting circuitry, and turns off the switching element to operatively disconnect the battery and the starter motor from the low voltage supply.

5. The control system of any preceding claim wherein the disconnecting circuitry is a Zener diode.

6. The control system of claim 5, wherein the battery charging circuit includes a biasing resistor having a first end coupled to the low voltage supply, and a second end coupled to a control terminal of the switching element and to a cathode of the Zener diode.

7. The control system of claim 6, wherein the biasing resistor provides a voltage sufficient to maintain the Zener diode in a breakdown mode.

8. The control system of claim 5, 6 or 7, wherein the threshold value of the Zener diode is about 12 volts.

9. The control system of claim 5, 6 or 7, wherein the threshold value of the Zener diode is between about 9 volts and about 12 volts.

10. The control system of claim 5, wherein the threshold value of the Zener diode is between about 1 volt and about 5 volts less than a maximum battery voltage.

11. A control system for an internal combustion engine having an electric starter motor powered by a battery, and having a mechanical starter for manual start operation, the control system comprising:
an ignition circuit configured to generate a high-voltage output for providing a spark;
a power conditioning circuit configured to convert the high-voltage output to a low voltage supply;
a voltage regulation circuit having an input adapted to receive the low voltage supply and provide a regulated component supply voltage;
an electronic control unit adapted to receive the regulated component supply voltage and control functioning of the engine;
a battery charging circuit having an electronic switching element adapted to receive the low voltage supply and operatively couple the battery to the low voltage supply to charge the battery;
the battery charging circuit including disconnecting circuitry operatively coupled to a base of an electronic switching element, wherein if a voltage level of the battery falls below a predetermined value, the disconnecting circuitry turns off the electronic switching element to electrically disconnect the battery from the low voltage supply and disable battery charging operation; and
wherein the mechanical starter is configured to start the engine if the battery is insufficiently charged to drive the electric motor to start the engine.

12. The control system of claim 11 wherein the disconnecting circuitry is a Zener diode.

13. The control system of claim 11 or 12, wherein the battery charging circuit includes a blocking diode operatively coupled between an output terminal of the electronic switching element and the battery to prevent reverse current flow from the battery to the electronic switching element.

14. The control system of claim 11, 12 or 13, wherein a short-circuit between the starter motor and ground causes a voltage level of the battery to fall below the predetermined threshold value of the disconnecting circuitry, and turns off the electronic switching element to operatively disconnect the battery and the starter motor from the low voltage supply.

15. The control system of claim 12, wherein the battery charging circuit includes a biasing resistor having a first end coupled to the low voltage supply, and a second end coupled to a gate of the electronic switching element and to a cathode of the Zener diode.

16. The control system of claim 15, wherein the biasing resistor provides a voltage sufficient to maintain the Zener diode in a breakdown mode.

17. The control system of claim 12, wherein a threshold value of the Zener diode is between about 9 volts and about 12 volts.

18. A battery isolation circuit for use with a power conditioning circuit for an internal combustion engine, the engine having an electric starter motor powered by a battery and a mechanical starter for manual start operation, the battery isolation circuit comprising:
a transistor adapted to receive a low voltage supply from the power conditioning circuit and operatively couple the low voltage supply to the battery to charge the battery when the transistor is turned on;
disconnecting circuitry operatively coupled to a base of the transistor and to the low voltage supply, wherein if a voltage level of the battery falls below a predetermined threshold value of the disconnecting circuitry, the disconnecting circuitry turns off the transistor to electrically disconnect the battery from the low voltage supply; and
wherein the mechanical starter is configured to start the engine if the battery is insufficiently charged.

19. The control system of claim 18 wherein the disconnecting circuitry is a Zener diode.

20. The battery isolation circuit of claim 19, wherein a short-circuit between the starter motor and ground causes the voltage level of the battery to fall below the predetermined threshold value of the Zener diode, which reverse biases the Zener diode and turns off the transistor to operatively disconnect the battery and the starter motor from the low voltage supply.

21. The battery isolation circuit of claim 19 or 20, further comprising a biasing resistor having a first end coupled to the low voltage supply, and a second end coupled to a gate of the transistor and to a cathode of the Zener diode.

22. The battery isolation circuit of claim 21, wherein the biasing resistor provides a voltage sufficient to maintain the Zener diode in a breakdown mode.

23. The battery isolation circuit of any one of claims 18 to 22, further comprising a blocking diode operatively coupled between an output terminal of the transistor and the battery to prevent reverse current flow from the battery to the transistor.
